(19) Europäisches Patentamt / European Patent Office / Office européen des brevets

(11) **EP 3 754 829 B1**

(12) **EUROPEAN PATENT SPECIFICATION**

(45) Date of publication and mention
of the grant of the patent:
**06.09.2023 Bulletin 2023/36**

(21) Application number: **19180789.0**

(22) Date of filing: **18.06.2019**

(51) International Patent Classification (IPC):
$H02M\ 3/335$ (2006.01)    $H02M\ 1/14$ (2006.01)
$H05B\ 45/305$ (2020.01)   $H05B\ 45/355$ (2020.01)
$H05B\ 45/38$ (2020.01)    $H05B\ 45/382$ (2020.01)
$H05B\ 45/39$ (2020.01)

(52) Cooperative Patent Classification (CPC):
**H02M 1/14; H02M 3/01; H02M 3/33571;
H02M 3/33592; H05B 45/305; H05B 45/355;
H05B 45/38; H05B 45/382; H05B 45/39;**
H02M 1/0009; H02M 1/0058; H02M 1/4208;
H02M 3/33573; Y02B 20/30; Y02B 70/10

(54) **LLC CIRCUIT**

LLC-SCHALTUNG

CIRCUIT LLC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.12.2020 Bulletin 2020/52**

(73) Proprietor: **Tridonic GmbH & Co. KG
6851 Dornbirn (AT)**

(72) Inventors:
• **Stark, Stefan
6835 Muntlix (AT)**
• **Gstir, Sascha
6923 Lauterach (AT)**

(74) Representative: **Rupp, Christian
Mitscherlich PartmbB
Patent- und Rechtsanwälte
Karlstraße 7
80333 München (DE)**

(56) References cited:
**DE-A1-102015 206 982    TW-A- 201 626 848
US-A1- 2003 043 599**

**Description**

TECHNICAL FIELD OF THE INVENTION

The present invention relates to the field of power supply circuits. The invention, particularly, relates to an LLC circuit having output terminals for supplying an LED load, method for operating thereof, and LED driver.

BACKGROUND OF THE INVENTION

Isolated LLC circuits are well known examples of switched resonance circuits.

An LLC is a resonant circuit that may be controlled, by adjusting the frequency and/or duty cycle of switches, to achieve a constant output voltage by controlling a switching mechanism feeding a resonance circuit by a transformer. When isolated, a LLC comprises a primary side and a secondary side of a transformer. The LLC provides the benefit of zero voltage turn-on of two main switches on the primary side in a half-bridge (HB) and four switches on the primary side in a full-bridge. Moreover, zero current turn-off of the secondary side rectifier diodes can be achieved, which can reduce the switching loss of the power supply and improve the power converter through soft switching technology.

By using an LLC as current source, it is important to strain the transformer and the rectification diodes in the output circuit as symmetrical as possible. In fact, if there is a good symmetry, the windings will be strained equally and the conduction losses of the rectifying diodes will be reduced. In other words, the winding conditions and rectifying diodes can also cause asymmetric currents through the secondary side rectifier and small secondary side currents. This leads to a one-sided conduction through the rectifier. This means for one-half cycle the voltage at the magnetizing inductance will stay below the reflected (secondary to primary side transformed) voltage.

Therefore, no energy can be transmitted to the secondary side during this half cycle. As a result, the output capacitor will be charged only with half the HB switching frequency.

This also causes higher voltage ripple at the output, and the resulting lower reflected voltage at the beginning of each switching cycle results in high current peaks and also results in a higher output current compared to the case without using a duty cycle control.

The mentioned high current peaks are harmful for the LED modules. Therefore, a filter (C or LC networks) is needed in the output in order to damp this high frequency part of the current.

Two parameters may affect the symmetry of the middle point voltage (and in succession the symmetry of currents through all two or four rectifying diodes):

- the dead time between the two switches (each dead time can be set separately). Namely, the time between the turning off of one of the switches and the turning on of the complementary one. During the dead time, the central point of the half-bridge circuit of the LLC circuit gets time to charge from the ground ("chassis ground", GND for short) to the supply voltage (e.g., a bus voltage) and vice versa from the supply voltage to the GND. In the known LLC circuits, a fixed dead time is often used in terms of the total load / energy range. In particular, the fixed dead time is used with respect to the different dimming levels of dimmable LED loads.

- the duty cycle control: parameter to set the duty cycle of the half-bridge beside a 50% ratio, wherein a duty cycle or power cycle is the fraction of one period in which a signal or system is active. The duty cycle is commonly expressed as a percentage or a ratio.

These two parameters are defined during the design phase and can be set in each state of the finite state machine (for example one value for the start-up phase and another value for the run phase). Both dead time and duty cycle control are set once per device.

The tolerance (structure) of the resonant tank transformer has a large impact in the output current symmetry. To be sure that there will be no problem in the field (with different transformer tolerances), the designs should be done with worst case transformers at highest output load.

Beside the structure and the tolerance, the output voltage also has influence on the symmetry of the output load. In fact, based on the voltage gain of the resonant tank circuit, another half-bridge frequency is necessary and, therefore, it is possible that the dead time is too short and a capacitive current detection (CCD) is necessary in order to prevent high cross currents through the switches. The CCD increases the dead time (time between the two switches) and that could amplify the asymmetry.

Besides, the output filter will be designed / verified by setting the load to the smallest voltage and the highest current, and then monitoring the output current. If the internal limit (40% peak HF current) is exceeded a higher capacitor will be used.

However, an imprecise design results in high output current peaks, and, therefore, a large output filter should be designed in order to protect the LED modules.

However, one of the main limitations of the output filter is the size. Sometimes a compromise between filter quality and needed space should be found.

In summary, the duty cycle and the dead time should be set as static parameters for different loads. Thus, reaching a more efficient circuit requires a complex design.

Furthermore, the known configuration also requires big capacitors and, therefore, more space, since the HF output current may be high.

Document DE 102015206982 A1 discloses a converter with an LLC resonance circuit, wherein starting from a secondary side lighting means, such as an LED path, can be supplied, the LLC resonant circuit having: a half-bridge circuit with two switches connected in series, which are controlled by a control circuit, a resonant circuit supplied from a center point of the two switches, and one based on an output of the resonant circuit with AC voltage fed transformer, on the secondary side of which a current path is provided for each of the two polarities of the AC voltage. A detection circuit is provided which detects a signal that reflects currents in the two current paths and / or their ratio, and the control circuit sets the timing of the two switches of the half-bridge circuit as a function of the signal detected by the detection circuit.

In view of the above-mentioned problems and disadvantages, the present invention aims to solve the problem of the current and voltage asymmetries at the secondary side of an LLC circuit.

The present invention has, thereby, the object to provide an improved LLC circuit, method for operating thereof, and LED driver in order to solve the above mentioned problems.

SUMMARY OF THE INVENTION

The object of the present invention is achieved by the solution provided in the enclosed independent claims. Advantageous implementations of the present invention are further defined in the dependent claims.

BRIEF DESCRIPTION OF THE DRAWINGS

The invention will be explained in the followings together with the figures.

Fig. 1 illustrates an example of schematic representation of a semi-automatic LLC circuit according to an embodiment of this invention;

Fig. 2 illustrates an example of a timing diagram in accordance with an embodiment of the invention;

Fig. 3 (a) illustrates a graph of an example of symmetry of two successive voltage cycles at the secondary side of a transformer of an LLC circuit according to an embodiment of this invention;

Fig. 3 (b) illustrates a graph of an example of asymmetry of two successive voltage cycles at the secondary side of the transformer of the LLC circuit according to an embodiment of this invention;

Fig. 4 illustrates an example of a circuit diagram of one embodiment of a full-automatic LLC circuit of this invention;

Fig. 5 illustrates a flow chart of an implementation not forming part of the invention based on the voltage over the resonant capacitor of a full-automatic LLC circuit;

Fig. 6 illustrates a flow chart of another implementation not forming part of the invention based on the voltage over the resonant capacitor of a full-automatic LLC circuit;

Fig. 7a illustrates another exemplary circuit diagram of one implementation not forming part of the invention of a full-automatic LLC circuit based on a current through rectifying diodes;

Fig. 7b illustrates an exemplary circuit diagram of a synchronous rectification circuit not forming part of the invention at the secondary side of the full-automatic LLC circuit;

Fig. 7c illustrates an exemplary circuit diagram of a circuit not forming part of the invention at the primary side of the full-automatic LLC circuit;

Fig. 7d illustrates a voltage through a resistor as a function of time in the full-automatic LLC circuit;

Fig. 8 illustrates an exemplary circuit diagram of a comparator circuit not forming part of the invention at the secondary side of a full-automatic LLC circuit; and

Fig. 9 illustrates a flow chart of an implementation not forming part of the invention based on the current through the rectifying diodes of the full-automatic LLC circuit.

DETAILED DESCRIPTION OF THE PREFERRED EMBODIMENTS

Aspects of the present invention are described herein in the context of a LLC circuit.

The present invention is described more fully hereinafter with reference to the accompanying drawings, in which various aspects of the present invention are shown. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

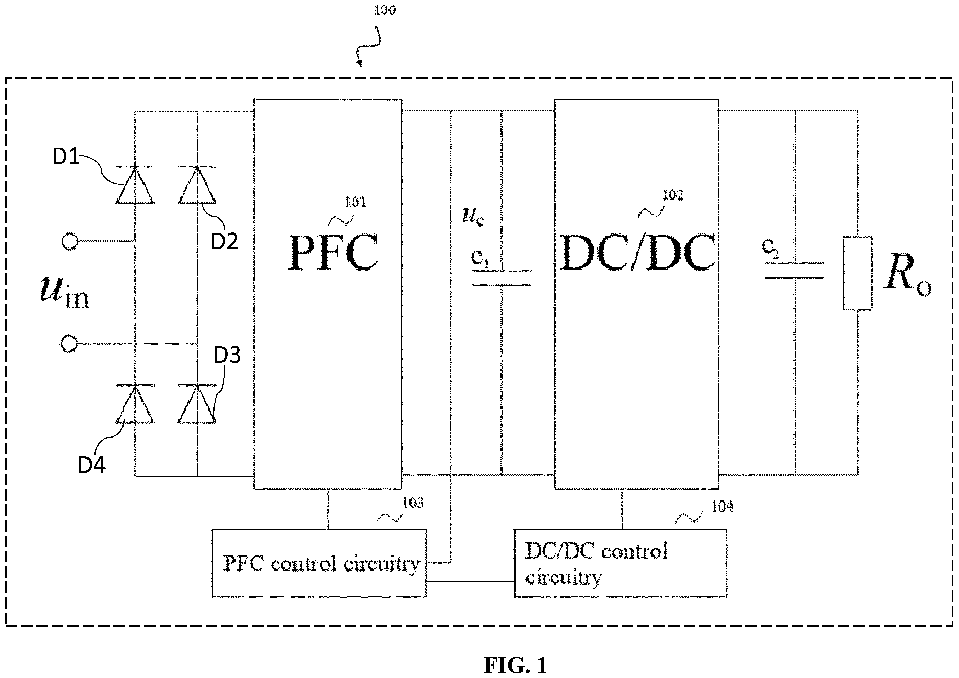

Fig. 1 shows a schematic representation of an embodiment of a semi-automatic LED converter 100 for an LED.

The LED converter 100 comprises a closed loop DC/DC circuit 102, a DC/DC control circuit 104 connecting the DC/DC circuit 102 to a PFC circuit 101, preferably a boost PFC circuit. It should be understand that the DC/DC circuit 102 and the PFC circuit 101 can be well known DC/DC and PFC circuits, which are omitted in Fig. 1.

Moreover, a PFC control circuit 103 is shown which connects and transmits the feedback of an output voltage Uc to the PFC circuit 101 and to the DC/DC control circuit 104.

Furthermore, two capacitors C1 and C2 for energy storage and filtering of HF current and voltage ripple are shown, as well as four diodes D1, D2, D3 and D4 for rectifying an input voltage Uin.

The DC/DC circuit 102 comprises a half-bridge or full-bridge circuit and a transformer 205.

However, it requires specific parameter settings of PFC mode, (namely, discontinuous conduction mode (DCM), continuous conduction mode (CCM) or boundary conduction mode (BCM)), nominal current, respective switch-on time periods TON1, TON2 of the DC/DC, the dead time, the duty cycle of the switches in the DC/DC, and the nominal current for different output load operating conditions.

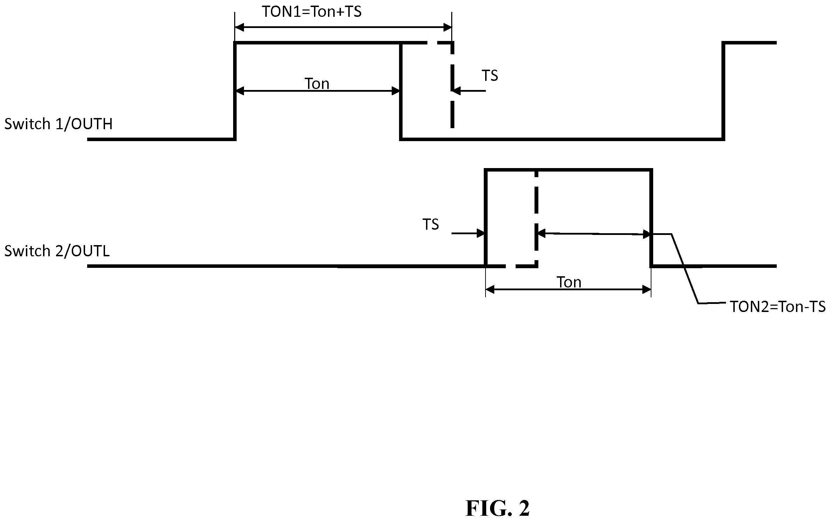

More specifically, as it is illustrated in Fig. 2, the DC/DC control circuit 104 can include a functionality called duty-cycle control, which controls the switch-on time in each cycle. The switch-on time period TON1 of the first switch 202 differs from the switch-on time period TON2 of the second switch 203 of the half-bridge or full-bridge circuit.

In particular, with this functionality, the pulse width of the high side (H) and the low side (L) switch of the LLC half-bridge can be influenced while the switching frequency remains constant. The switching pulse (on-time of a switch) can be increased or decreased by some duration and an opposite effect can be obtained on the other switch.

In particular, in Fig. 2, one of the two possible cases for the duty-cycle control is shown. In this embodiment, the on-time of the high side switch is increased by the duration TS and the on-time of the low side switch is decreased. In another embodiment, the inverse effect takes place. Namely, the on-time of the low side switch is increased and the on-time of the high switch is decreased by the same amount of time.

A symmetric switching pattern (TS = 0s) of the half-bridge results in an oscillation of a resonant capacitor Cr about half the bus voltage. Therefore, also the currents through the secondary side rectifier are symmetrical.

If an asymmetrical switching pattern (TS > 0s) is used, the mean value of the voltage across Cr (Vcr) lies above or beneath the halved bus voltage. This causes also asymmetric currents through the secondary side rectifier and, thus, at very low dimming levels, small secondary side currents. This leads to a one-sided conduction through the rectifier. This means that for one half cycle the voltage at a magnetizing inductance Lp will stay below the reflected (secondary to primary side transformed) voltage.

Therefore, no energy can be transmitted to the secondary side during this half cycle. As a result the output capacitor will be charged only with half the HB switching frequency. This higher voltage ripple at the output, the resulting lower reflected voltage at the beginning of each switching cycle and the shifted mean value of Vcr result in high current peaks and also result in a higher output current compared to the case without using the duty cycle control.

This embodiment provides the advantage that, at higher dimming levels, an asymmetry of the secondary LLC transformer windings can be compensated.

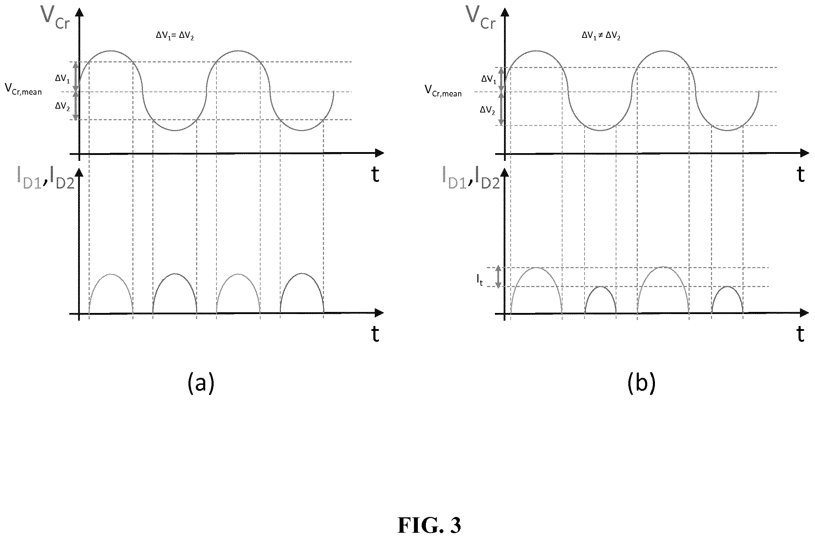

In the embodiment shown in Fig. 3, as illustrated above, the degree of asymmetry of the switch-on time periods TON1, TON2 is a function of the voltage and/or the current of a LED load indirectly supplied from the output terminals.

Fig. 3 (a) illustrates a graph of an example of symmetry of two successive voltage cycles at the secondary side of the transformer of the LLC circuit according to an embodiment of this invention.

Fig. 3 (b) illustrates a graph of an example of asymmetry of two successive voltage cycles at the secondary side of the transformer of the LLC circuit. It should be noticed that the asymmetry of two successive voltage cycles at the secondary side of the transformer can also be represented by asymmetry of two successive current cycles at the secondary side of the transformer, for example, by placing a sensing resistor. This also applies to the following embodiments and, therefore, is omitted later.

Preferably, as shown in Fig. 2, to encounter the asymmetry on the secondary side, the switch-on times TON1 and TON2 can be based on the following equations. The switch-on time TON1 equals to the original switch-on time Ton plus an amendment time period TS, illustrated by the dotted line,

$$TON1 = Ton + TS.$$

The switch-on time TON2 equals to original switch-on time Ton minus the amendment time period TS, TON2=Ton-TS.

More specifically, the amendment of the switch on time TON1 equals the amendment of the switch on time TON2. Therefore, once the switch on time TON1 is increased or decreased by the pre-determined time period TS, the switch on time TON2 is relevantly decreased by the pre-determined time period TS. The amendment time TS is determined by the DC/DC control circuit 104.

In an embodiment, the PFC circuit 101 is a PFC double loop control, the output of the outer loop voltage loop determines the reference of the inner loop current loop (and also adds the sinusoidal information of the input voltage Uc), so that the inner loop can follow the input voltage waveform to achieve power factor correction (PFC).

More specifically, for different output load conditions, the boost PFC switch can be in different modes. Heavy load with high nominal current can cause CCM (continuous-conduction mode) or BCM (boundary-conduction mode) mode, while light load with low nominal current can cause discontinuous-conduction mode (DCM), as well as asymmetry of two successive voltage cycles at the secondary side of the transformer 205.

This may be caused by the transformer 205 or the diodes 206, 207 in the secondary side, and this may cause the output load condition to change. Such feedback is given to the PFC control circuit 103 in order to change the PFC, such as changing the boost PFC switch from BCM into DCM by a register in the PFC control circuit 103, if a certain load point is undershot, and the nominal current.

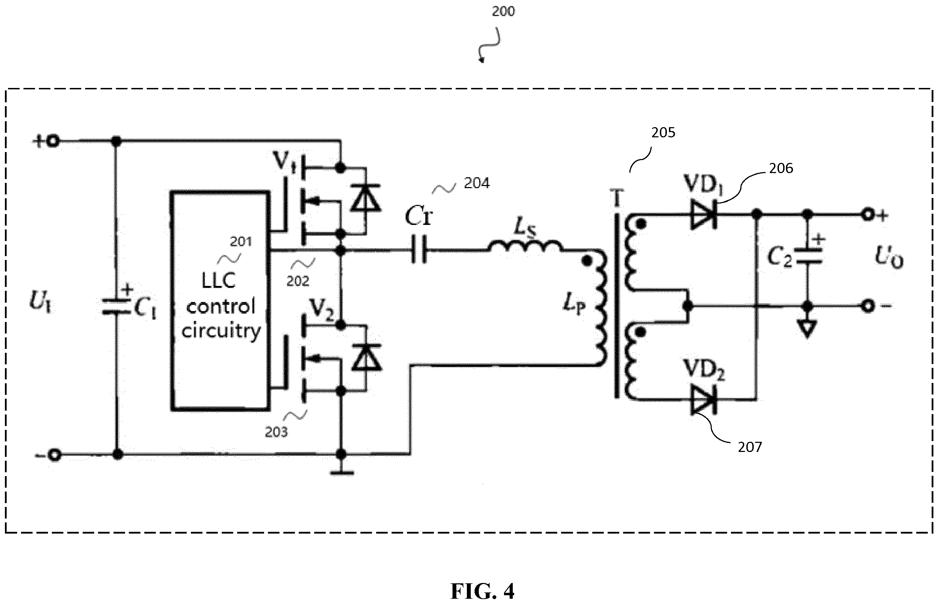

Fig. 4 shows a circuit diagram of one embodiment of a full-automatic LLC circuit 200 of this invention.

It should be understood that, although it only illustrates a half-bridge in this embodiment, a full-bridge design also can be implemented here, since the idea is the same, so as for the rest of the embodiments.

In this LLC circuit 200, the control circuit 201 comprises a lookup table, which contains in one column the LED voltage and in another column the designed duty-cycle value.

The LLC control circuit 201 knows the LED load voltage and can set the appropriate/designed duty-cycle value. In the design phase of a wattage/load, the duty-cycle at different LED voltages can be determined and the lookup table can be implemented into the LLC control circuit 201.

Preferably, the check and change of the duty-cycle value can be done cyclically. Further, the lookup table also comprises respective switch-on time periods TON1, TON2 of switches 202 and 203, if an asymmetry is detected, so that the degree of asymmetry of the switch-on time periods TON1, TON2 is set in a feed-forward approach by the control circuit 201 setting the asymmetry of the switch-on time periods TON1, TON2 using a feedback signal representing the voltage of the LED load.

Therefore, if the secondary side gives a feedback to the LLC control circuit 200 saying that there is an asymmetry of two successive voltage cycles at the secondary side of the transformer, as shown in Fig. 3(B), the LLC control circuit 201 can change the switch-on time periods TON1, TON2 based on the degree of the asymmetry according to the look up table.

The LLC control circuit 201 changes the duty-cycle as first. If the asymmetry cannot be solved by changing the duty-cycle, then the switch-on times TON1 and TON2 are changed.

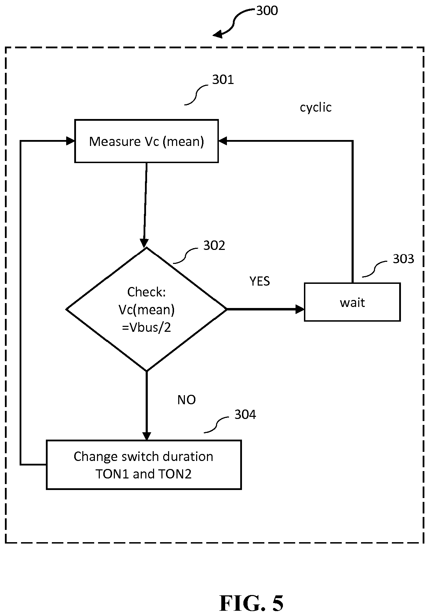

Fig. 5 shows a flow chart 300 of an alternative implementation not forming part of the invention.

The idea is to measure the voltage over the resonant capacitor Cr 204 shown in Fig. 4.

If the resonant circuit is symmetric, then the mean voltage of the voltage over the resonant capacitor 204 Vcr is equal to the half of the bus voltage (which is also controlled by the PFC). If there is an asymmetry of the circuit, then the Vcr is above or below the half of the bus voltage.

A schematic representation of a finite state machine (FSM) in the LLC control circuit 201 can look like in Fig. 5.

At first, the voltage over the resonant capacitor must be measured 301 and, afterwards, compared with the half of the bus voltage 302. If they are equal, then, after a certain WAIT, the measurement can be repeated 303. If the measured voltage is different to the half of the BUS voltage, then the duty-cycle and the switch-on times TON1 and TON2 can be changed 304.

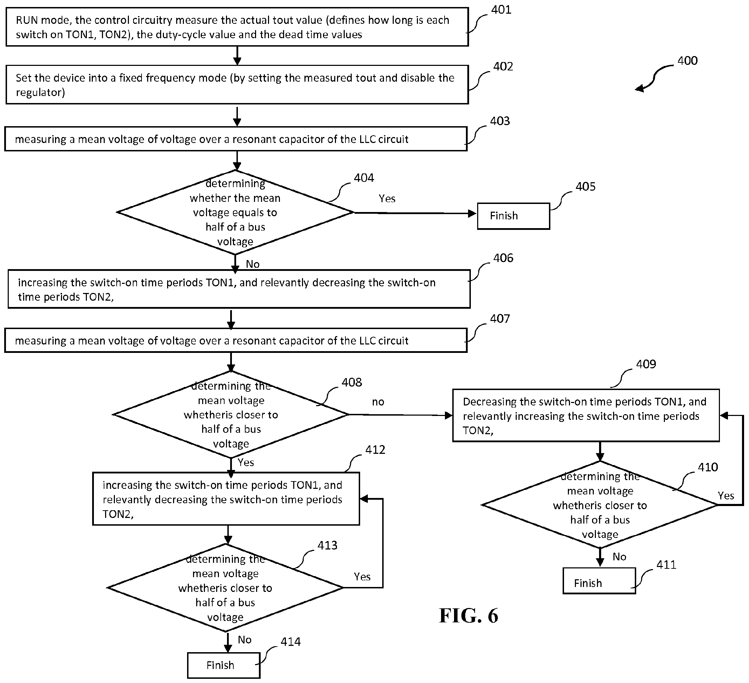

Fig. 6 shows a flow chart 400 of a further implementation not forming part of the invention based on the voltage over the resonant capacitor 204.

The control circuit 104 is further configured to:

- measure a mean voltage of voltage over a resonant capacitor of the LLC circuit 403;

- determine whether the mean voltage equals to half of a bus voltage 404;

- if so, finish the process 405 and set the new switch on times TON1 and TON2 as default:

- if not, increase the switch-on time periods TON1, and relevantly decreasing the switch-on time periods TON2, 406;

- measure a new mean voltage of voltage over the resonant capacitor 407, and determining if the new mean voltage is closer to half of the bus voltage than the previous mean voltage 408;

- if so, increasing the switch-on time periods TON1, and decreasing the switch-on time periods TON2 412, until mean voltage equals to half bus voltage, more specifically, continue to measure a new mean voltage of voltage over the resonant capacitor, and determining if the new mean voltage is closer to half of the bus voltage than the previous mean voltage 413:

if so, cyclically increase TON1 and relevantly decrease TON2 412, until it does not get closer to half mean voltage, and

if not, finish the process 414 and set the new switch on times TON1 and TON2 as default;

- if not, decrease the switch-on time periods TON1, and increase the switch-on time periods TON2 409, until mean voltage equals to half bus voltage, more specifically continue to decrease the switch-on time periods TON1, and increase the switch-on time periods TON2 and measure a new mean voltage of voltage over the resonant capacitor, and determining if the new mean voltage is closer to half of the bus voltage than the previous mean voltage 410:

if so, cyclically decrease TON1 and relevantly increase TON2 409, until it does not get closer to half mean voltage, and

if not, finish the process 411 and set the new switch on times TON1 and TON2 as default.

Preferably, the control circuit 104 is further configured in such a way that the LED converter 100 starts a RUN mode, the control circuit 104 measures the actual tout value (defines how long is each switch on TON1, TON2), the duty-cycle value and the dead time values, and sets the device into a fixed frequency mode (by setting the measured tout and disabling the regulator).

Preferably, the duty-cycle is only changed in one step before the change of switch-on times TON1 and TON2, which means the LLC circuit will first use a similar approach in order to fix the duty-cycle for solve the asymmetry. Alternatively, the duty-cycle can be changed together with the changing of the switch-on times TON1 and TON2.

Preferably, increasing or decreasing switch-on times TON1 and TON2 is done by using a predetermined time period Ts. Ts is pre-set or pre-determined by the control circuit 104, which is smaller than TON1 AND TON2.

More preferably, a pre-determined time period threshold is chosen to make the change of TON1 or TON2 stop. Once the new TON1 or TON2 is shorter than the pre-determined time period, for example, the threshold is half the original TON1 or TON2.

Preferably, in the last step of increasing or decreasing the switch-on times TON1 and TON2, if it is determined that the new mean voltage is not closer to the half of the bus voltage than the previous mean voltage after a cyclic changing, then the control circuit will take one step back. The TON1 or TON2 will increase or decrease back the time period Ts by one step, so as to make the one to the last TON1 and TON2 as the default switch-on times.

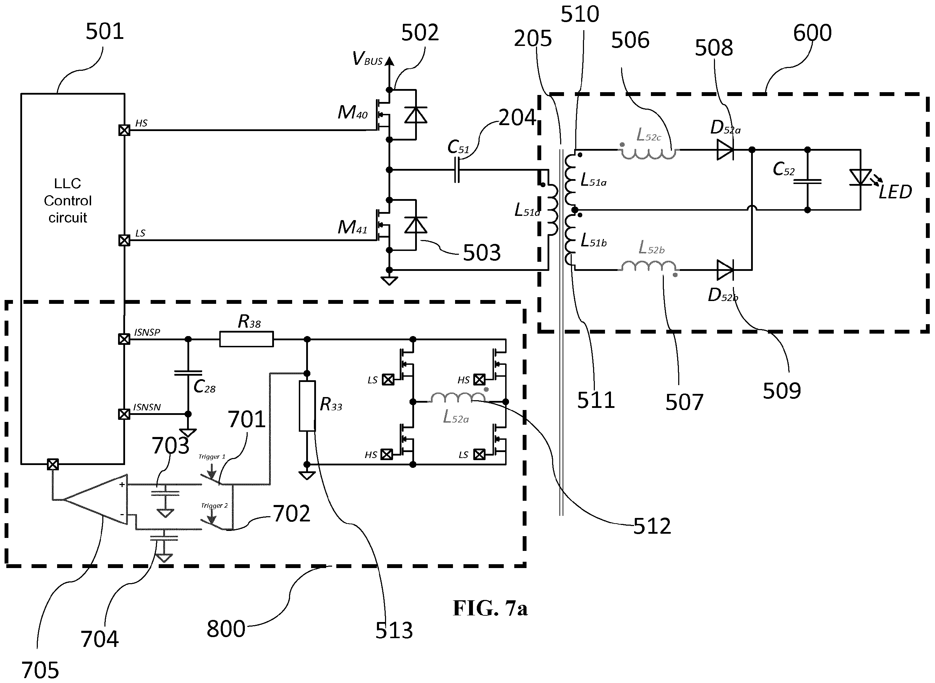

Fig. 7a illustrates an example of a circuit diagram of one implementation not forming part of the invention of a full-automatic LLC circuit 200 based on the current through the rectifying diodes 508, 509.

As shown in Fig. 7a, the asymmetry of two successive voltage cycles at the secondary side of the transformer 205 can also be represented with asymmetry of two successive current cycles at the secondary side of the transformer 205. Hence, in this implementation, the LLC circuit 200 comprises two rectifying diodes 508, 509, wherein two detection coils 506, 507 connect in series with the rectifying diodes 508, 509 separately on the secondary side of the LLC circuit 200, and the two detection coils 506, 507 are configured to receive the current values thereof so as to detect the asymmetry of two successive voltage cycles at the secondary side of the transformer 205. The coil 512 is coupled with these coils (506, 507) and represents the output current.

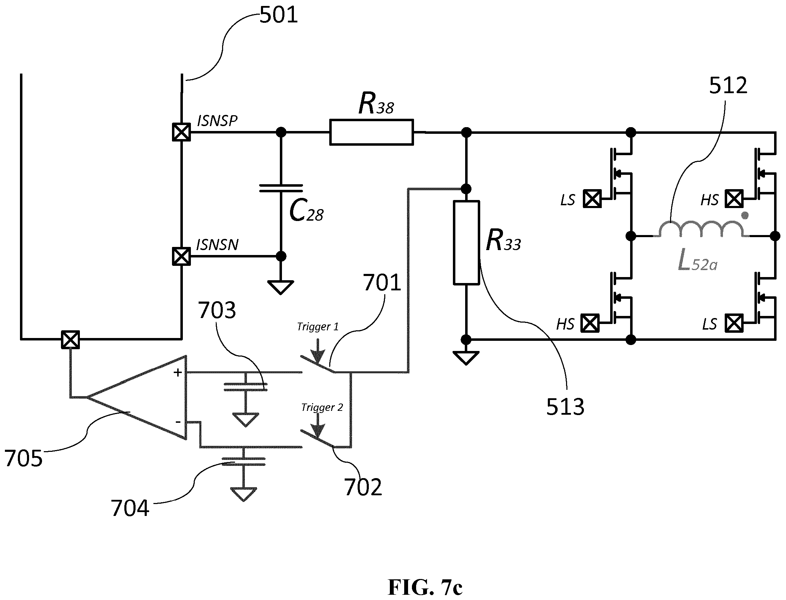

Moreover, the resistor 513 transforms this current information into a voltage which will be used by the comparator 705 to detect the asymmetry of the output (see also Fig. 7c).

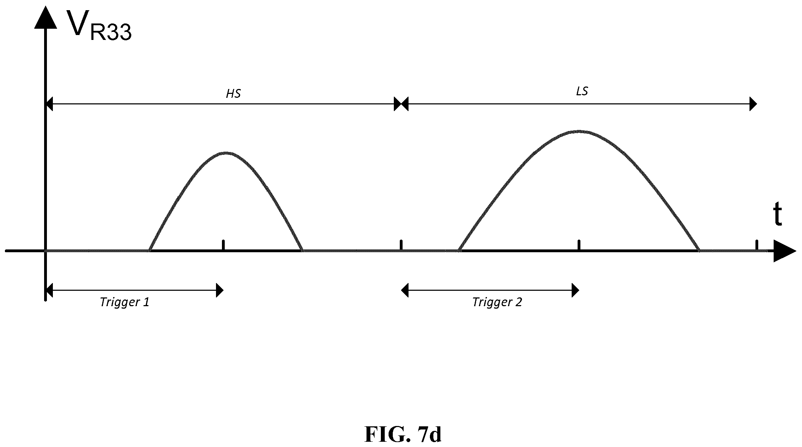

In order to trigger the asymmetry, it is important to trigger the maximum peak of each half wave (see Fig. 7d).

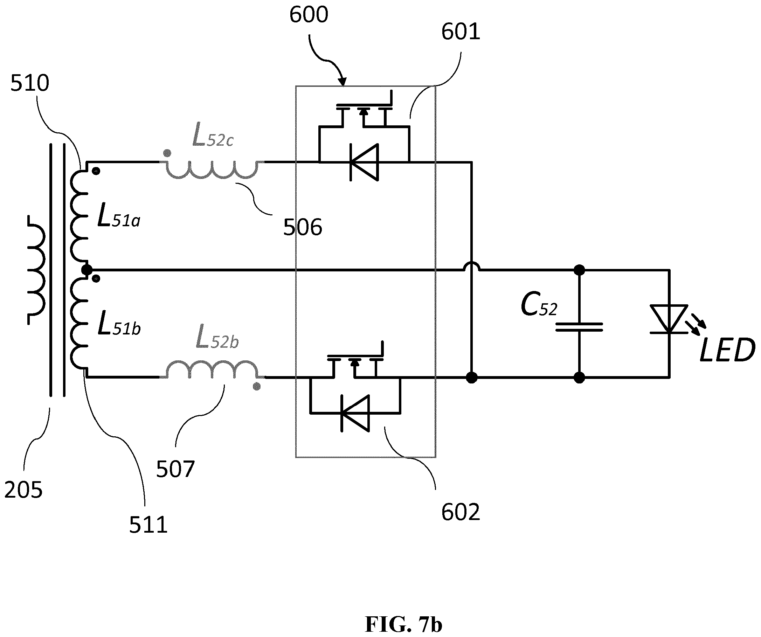

The current-rectify is implemented by a synchronous rectification circuit 601, 602 at the secondary side as shown in Fig. 7b. The synchronous rectification circuit 601, 602 is synchronized with the switch-on time periods TON1, TON2 and two detection coils 603, 604 are connected to the synchronous rectification circuit 601, 602 in series, and the two detection coils 603, 604 are configured to receive the current values thereof so as to detect the asymmetry of two successive voltage cycles at the secondary side of the transformer 205.

The voltage is generated by the rectified current and a sensing resistor (not shown in the figures). The active rectification is synchronized (switches 601 and 602) with the half-bridge, that means for each OUTH and OUTL a half wave signal is generated (illustrated in Fig. 2). The peak information for each half wave signal (OUTH and OUTL on) can be tracked with a digital peak tracking.

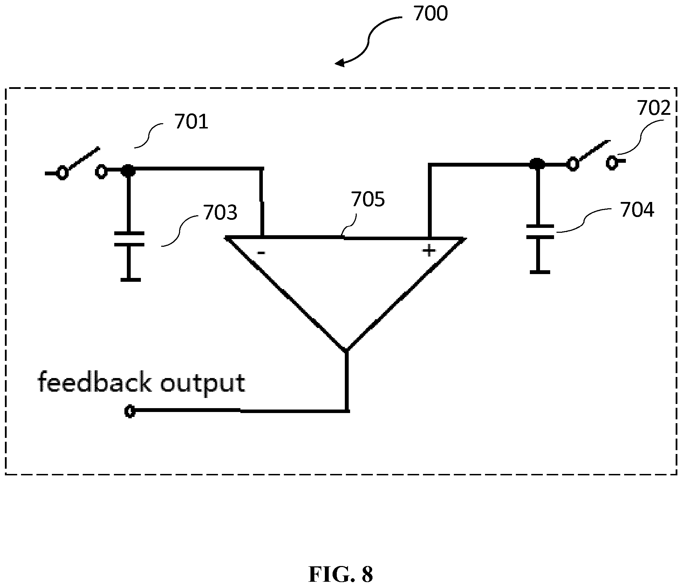

The resistor 513 connect to the comparator 705 (see also Fig. 8 and Fig. 7c) through two switches 701 and 702, and two capacitors 703 and 704, wherein the two switches 701 and 702 are synchronised with the switch-on time periods TON1, TON2, so that rectified peak values of the switch-on time periods TON1, TON2 can be transferred to and compared by the comparator 705 with the use of the two capacitors 703 and 704. When the switch-on TON1 is on, the first input switch 701 is synchronized, and when the switch-on TON2 is on, the second input switch 702 is synchronized, so that the current values can be measured by the comparator 705 and the capacitors 703 and 704.

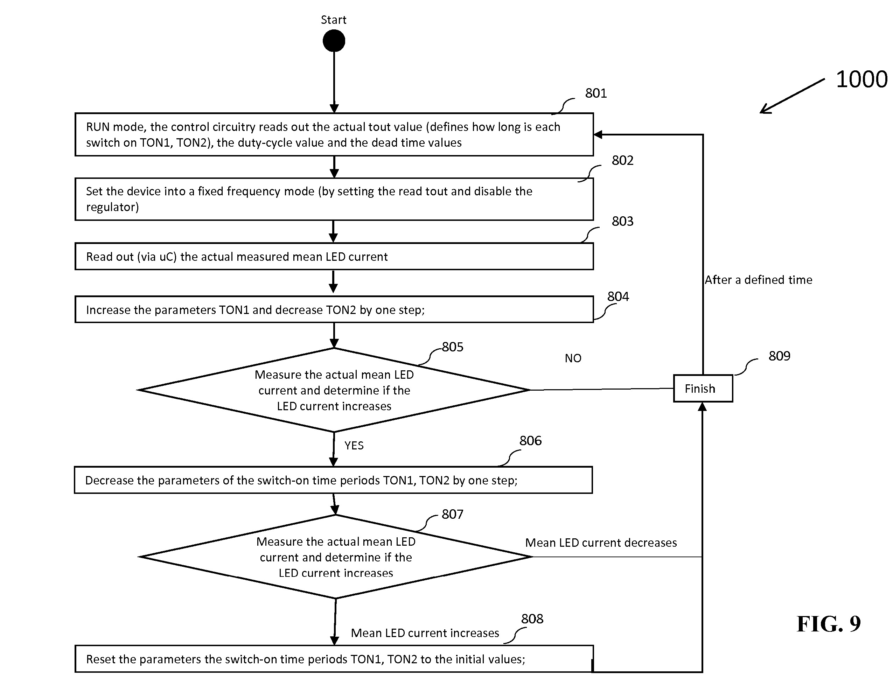

The idea in figure 9 is that in the LLC control circuit 104 for each half wave a capacitor 703 and 704 will be loaded. The charging phase starts with the beginning of the half-bridge signals (OUTH and OUTL) and end in the half of the on phase (set by the LLC control circuit 104). Afterwards the two capacitor 703 and 704 values can be compared and used for setting the switch on time TON1 and TON2 or duty cycle to reduce the asymmetry.

In order to be sure that the current regulation still works, some changes should be done within the sensing path. The current through the secondary path will still be rectified, but instead of a passive filtering an active filter by the LLC control circuit is necessary in order to get the LED current information (is used as controlled variable).

The active filtering is used in order to have outside of the LLC control circuit 201 the alternating current (voltage after the sensing resistor which has not been shown in the figures) information available, which is used to get the symmetry information.

It should be understood that the LLC circuit 200 can be a LED driver in practice, comprising the above exemplary LLC circuit 200.

Fig. 9 illustrates a flow chart of an implementation not forming part of the invention based on the current through the rectifying diodes of a full-automatic LLC circuit 200.

More specifically, Fig. 9 shows a method 1000 not forming part of the invention for operating an LED converter 100, especially a LED converter 100 of a LED driver, wherein the method comprising the steps of:

- measuring switch-on time periods TON1, TON2 of two switches of the half-bridge or full-bridge of the LED converter 100, preferably, also measuring duty cycle and dead time value thereof, 801,

- set half bridge into fixed frequency operation of the switches, 802,

- read out the actual measured mean LED current, 803,

- increasing the switch-on time period TON1, and relevantly decreasing the switch-on time period TON2, 804,

- measuring actual output current e.g. via current sense transformer and determining if the mean value of output current at the secondary side of the transformer is increased, 805:

    - if so, decrease the switch-on time period TON1, relevantly increase the switch-on time period TON2, 806 , and measuring the actual output current e.g. via current sense transformer and determine if the mean value of the output current increased, 807:

        if so, set the TON values back to the initial measured 801 values, 808,

if not, an improvement of the asymmetries can be seen and for one run the process is finished, 809,

- if not, an improvement of the asymmetries can be seen and for one run the process is finished, 809.

After a certain time in the finish state 809, the process can be repeated to see if an additional improvement is possible.

All features of all embodiments described, shown and/or claimed herein can be combined with each other.

While various embodiments of the present invention have been described above, it should be understood that they have been presented by way of example only and not limitation. Numerous changes to the disclosed embodiments can be made in accordance with the disclosure herein without departing from the scope of the invention. Thus, the breadth and scope of the present invention should not be limited by any of the above-described embodiments. Rather, the scope of the invention should be defined in accordance with the following claims.

**Reference Signs**

| 100 | LED converter |
| 101 | circuit |
| 102 | circuit |
| 103 | circuit |
| 104 | circuit |
| | |
| 200 | circuit |
| 201 | circuit |
| 202 | switch |
| 203 | switch |
| 204 | capacitor |
| 205 | transformer |
| | |
| 300 | flow chart |
| 301 | measure |
| 302 | check |
| 303 | wait |
| 304 | change |
| | |
| 400 | flow chart |
| 401 | measure |
| 402 | set |
| 403 | measuring |
| 404 | determining |
| 405 | finish |
| 406 | increasing |
| 407 | measuring |
| 408 | determining |

---

| | |
|---|---|
| 409 | decreasing |
| 410 | determining |
| 411 | finish |
| 412 | increasing |
| 413 | determining |
| 414 | finish |
| 501 | circuit |
| 502 | switch |
| 503 | switch |
| 504 | resistor |
| 506 | coil |
| 507 | coil |
| 508 | diode |
| 509 | diode |
| 510 | coil |
| 511 | coil |
| 512 | coil |
| 513 | resistor |
| 600 | circuit |
| 601 | switch |
| 602 | switch |
| 701 | switch |
| 702 | switch |
| 703 | capacitor |
| 704 | capacitor |
| 705 | comparator |

## Claims

1. An LLC circuit (200) having output terminals for supplying an LED load, comprising:

   - a half-bridge or full-bridge circuit having two switches (202, 203) in series, wherein the switches (202, 203) are alternatingly switched on with respective switch-on time periods TON1, TON2 which respectively depend on a designed duty-cycle value,
   - a transformer (205), and
   - a control circuit (201) configured to control the switch-on time period TON1 of the first switch (202) and the switch-on time period TON2 of the second switch (203) in each cycle to at least reduce any asymmetry of two successive voltage cycles at a secondary side of the transformer (205),

   **characterized in that**

   LLC control circuit (201) comprises a lookup table, which contains in one column the LED voltage and in another column the designed duty-cycle value, the LLC control circuit (201) being configured to set an appropriate/designed duty-cycle value based on the LED load voltage;

the lookup table of the LLC control circuit further comprising respective switch-on time periods TON1, TON2 of switches (202) and (203), and the LLC control circuit (201) being further configured to set, if an asymmetry is detected, the degree of asymmetry of the switch-on time periods TON1, TON2 in a feed-forward approach wherein the switching frequency is constant, using a feedback signal representing the voltage of the LED load;

whereby the LLC control circuit (201) is configured to change the duty-cycle as first, and, if the asymmetry cannot be solved by changing the duty-cycle, to change the switch-on times TON1 and TON2.

2. The LLC circuit (200) according to claim 1, wherein the degree of asymmetry of the switch-on time periods TON1, TON2 is a function of the voltage and/or the current of a LED load directly or indirectly supplied from the output terminals.

3. A LED driver, comprising a LLC circuit (200) according to any of the proceeding claims.

## Patentansprüche

1. LLC-Schaltung (200), die Ausgangsanschlüsse zum Zuführen einer LED-Last aufweist, umfassend:

   - eine Halbbrücken- oder Vollbrückenschaltung, die zwei Schalter (202, 203) in Reihe aufweist, wobei die Schalter (202, 203) abwechselnd mit jeweiligen Einschaltzeiträumen TON1, TON2 eingeschaltet sind, die jeweils auf einem konstruierten Tastgradwert beruhen,
   - einen Transformator (205), und
   - eine Steuerschaltung (201), die konfiguriert ist, um den Einschaltzeitraum TON1 des ersten Schalters (202) und den Einschaltzeitzeitraum TON2 des zweiten Schalters (203) in jedem Zyklus zu steuern, um eine Asymmetrie von zwei aufeinanderfolgenden Spannungszyklen an einer Sekundärseite des Transformators (205) mindestens zu reduzieren,

   **dadurch gekennzeichnet, dass**

   die LLC-Steuerschaltung (201) eine Nachschlagetabelle umfasst, die in einer Spalte die LED-Spannung und in einer anderen Spalte den konstruierten Tastgradwert enthält, wobei die LLC-Steuerschaltung (201) konfiguriert ist, um einen geeigneten/konstruierten Tastgradwert basierend auf der LED-Lastspannung einzustellen; die Nachschlagetabelle der LLC-Steuerschaltung ferner umfassend jeweilige Einschaltzeiträume TON1, TON2 von Schaltern (202) und (203), und wobei die LLC-Steuerschaltung (201) ferner konfiguriert ist, um, falls eine Asymmetrie erkannt wird, den Asymmetriegrad der Einschaltzeitzeiträume TON1, TON2 in einem Vorwärtskopplungsansatz einzustellen, wobei die Schaltfrequenz konstant ist, unter Verwendung eines Rückkopplungssignals, das die Spannung der LED-Last darstellt;

wobei die LLC-Steuerschaltung (201) konfiguriert ist, um den Tastgrad als ersten zu ändern, und, falls die Asymmetrie nicht durch ein Ändern des Tastgrads gelöst werden kann, um die Einschaltzeiten TON1 und TON2 zu ändern.

2. LLC-Schaltung (200) nach Anspruch 1, wobei der Asymmetriegrad der Einschaltzeiträume TON1, TON2 von der Spannung und/oder dem Strom einer LED-Last abhängig ist, die direkt oder indirekt von den Ausgangsanschlüssen zugeführt wird.

3. LED-Treiber, umfassend eine LLC-Schaltung (200) nach einem der vorstehenden Ansprüche.


**Revendications**

1. Circuit LLC (200) ayant des bornes de sortie permettant d'alimenter une charge de DEL, comprenant :

- un circuit à demi-pont ou à pont complet ayant deux commutateurs (202, 203) en série, les commutateurs (202, 203) étant activés en alternance avec des périodes de durée d'activation TON1, TON2 respectives qui dépendent respectivement d'une valeur prévue de cycle de service,
- un transformateur (205), et
- un circuit de commande (201) configuré pour commander la période de durée d'activation TON1 du premier commutateur (202) et la période de durée d'activation TON2 du second commutateur (203) dans chaque cycle au moins pour réduire l'une quelconque asymétrie de deux cycles de tension successifs au niveau d'un côté secondaire du transformateur (205),
**caractérisé en ce que**
le circuit de commande LLC (201) comprend une table de correspondance, qui contient dans une colonne la tension de DEL et dans une autre colonne la valeur prévue de cycle de service, le circuit de commande LLC (201) étant configuré pour régler une valeur appropriée/prévue de cycle de service en fonction de la tension de charge de DEL ;
la table de correspondance du circuit de commande LLC comprenant en outre des périodes d'activation TON1, TON2 respectives des commutateurs (202) et (203), et le circuit de commande LLC (201) étant configuré en outre pour régler, si une asymétrie est détectée, le degré d'asymétrie des périodes de durée d'activation TON1, TON2 dans une approche par anticipation dans laquelle la fréquence de commutation est constante, à l'aide d'un signal de rétroaction représentant la tension de la charge de DEL ; moyennant quoi le circuit de commande LLC (201) est configuré pour changer le cycle de service dans un premier temps, et, si l'asymétrie ne peut pas être résolue en changeant le cycle de service, pour changer les durées d'activation TON1 et TON2.

2. Circuit LLC (200) selon la revendication 1, dans lequel le degré d'asymétrie des périodes de durée d'activation TON1, TON2 est une fonction de la tension et/ou du courant d'une charge de DEL alimentée directement ou indirectement à partir des bornes de sortie.

3. Pilote de DEL, comprenant un circuit LLC (200) selon l'une quelconque des revendications précédentes.

FIG. 1

EP 3 754 829 B1

EP 3 754 829 B1

TON1=Ton+TS

Ton

TS

Switch 1/OUTH

TS

Switch 2/OUTL

Ton

TON2=Ton-TS

**FIG. 2**

(a)                    (b)

**FIG. 3**

**FIG. 4**

EP 3 754 829 B1

FIG. 5

EP 3 754 829 B1

401 — RUN mode, the control circuitry measure the actual tout value (defines how long is each switch on TON1, TON2), the duty-cycle value and the dead time values

402 — Set the device into a fixed frequency mode (by setting the measured tout and disable the regulator)

403 — measuring a mean voltage of voltage over a resonant capacitor of the LLC circuit

404 — determining whether the mean voltage equals to half of a bus voltage

405 — Yes → Finish

No

406 — increasing the switch-on time periods TON1, and relevantly decreasing the switch-on time periods TON2,

407 — measuring a mean voltage of voltage over a resonant capacitor of the LLC circuit

408 — determining the mean voltage whether is closer to half of a bus voltage

no →

409 — Decreasing the switch-on time periods TON1, and relevantly increasing the switch-on time periods TON2,

410 — determining the mean voltage whether is closer to half of a bus voltage

Yes →

No

411 — Finish

Yes

412 — increasing the switch-on time periods TON1, and relevantly decreasing the switch-on time periods TON2,

413 — determining the mean voltage whether is closer to half of a bus voltage

Yes

No

414 — Finish

400

**FIG. 6**

FIG. 7a

**FIG. 7b**

FIG. 7c

EP 3 754 829 B1

**FIG. 7d**

FIG. 8

EP 3 754 829 B1

EP 3 754 829 B1

Start

1000

**801** RUN mode, the control circuitry reads out the actual tout value (defines how long is each switch on TON1, TON2), the duty-cycle value and the dead time values

**802** Set the device into a fixed frequency mode (by setting the read tout and disable the regulator)

**803** Read out (via uC) the actual measured mean LED current

**804** Increase the parameters TON1 and decrease TON2 by one step;

After a defined time

**805** Measure the actual mean LED current and determine if the LED current increases — NO → Finish **809**

YES

**806** Decrease the parameters of the switch-on time periods TON1, TON2 by one step;

**807** Measure the actual mean LED current and determine if the LED current increases — Mean LED current decreases

Mean LED current increases

**808** Reset the parameters the switch-on time periods TON1, TON2 to the initial values;

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015206982 A1